(19) Europäisches Patentamt
European Patent Office
Office européen des brevets

(11) **EP 3 280 932 B1**

(12) **FASCICULE DE BREVET EUROPEEN**

(45) Date de publication et mention de la délivrance du brevet:
**28.04.2021 Bulletin 2021/17**

(21) Numéro de dépôt: **16721866.8**

(22) Date de dépôt: **31.03.2016**

(51) Int Cl.:
***F16H 61/04*** *(2006.01)*          ***F16H 63/50*** *(2006.01)*

(86) Numéro de dépôt international:
**PCT/FR2016/050726**

(87) Numéro de publication internationale:
**WO 2016/162615 (13.10.2016 Gazette 2016/41)**

(54) **PROCEDE DE PILOTAGE DE SYNCHRONISATION ET DE PASSAGE DE VITESSES**

VERFAHREN ZUR STEUERUNG DER SYNCHRONISATION UND GANGSCHALTUNG

METHOD FOR CONTROLLING SYNCHRONIZATIAN AND GEAR SHIFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2015 FR 1553150**

(43) Date de publication de la demande:
**14.02.2018 Bulletin 2018/07**

(73) Titulaire: **Renault S.A.S.**
**92100 Boulogne-Billancourt (FR)**

(72) Inventeur: **MALOUM, Abdelmalek**
**94550 Chevilly Larue (FR)**

(56) Documents cités:
**EP-A1- 2 354 599          DE-A1-102006 019 239**
**FR-A1- 2 998 529          FR-A1- 3 003 620**
**US-A1- 2012 330 519**

## Description

La présente invention se rapporte à la commande des passages de vitesses sur une boîte de vitesses de véhicule disposant d'au moins une source d'énergie, telle qu'un moteur thermique de traction et/ou une machine électrique de traction.

Elle a pour objet un procédé de pilotage de la synchronisation d'un pignon tournant sur un arbre primaire entraîné par une machine de traction du véhicule et lié en rotation à un arbre secondaire de boîte de vitesses à arbres parallèles dépourvue de mécanismes de synchronisation, par envoi à la machine de traction, avant l'accouplement du pignon sur l'arbre primaire, d'une commande de couple qui dépend d'un signal de couple calculé pour minimiser l'écart entre le régime primaire et le régime secondaire multiplié par le rapport de réduction entre ces deux arbres.

L'invention a également pour objet un procédé de passage de vitesses, comportant une première phase de synchronisation de la vitesse de l'arbre et du pignon, et une deuxième phase d'accouplement.

Cette invention s'applique sur toute transmission à arbres parallèles, dans laquelle des changements de rapport s'effectuent par déplacement d'un moyen de couplage sans anneaux de synchronisation, en particulier dans les groupes motopropulseurs électriques et hybrides.

Lorsque qu'un système de couplage par crabotage de baladeur sur les pignons est dépourvu de moyens de synchronisation mécaniques, la synchronisation des éléments tournants peut s'effectuer en pilotant le régime primaire de la boîte. Ce pilotage nécessite un contrôle précis du régime primaire par la machine de traction, afin d'éviter les à-coups de couple.

Par la publication DE 10 2006 019 239, on connaît un procédé de pilotage de synchronisation d'un pignon avec son arbre. Pour réaliser un accouplement confortable, le couple de la machine électrique de traction est maintenu sur une valeur constante élevée, jusqu'à ce que l'écart des régimes soit réduit en dessous d'un certain seuil, puis il devient proportionnel à l'écart de régime entre l'arbre et le pignon.

Toutefois, la précision de cette méthode se heurte à l'inertie de la machine de traction et à son temps de réponse aux consignes de pilotage en couple, notamment lorsque cette machine de traction est un moteur thermique. Par suite, l'accouplement n'est pas complètement transparent pour le conducteur. Pour continuer à satisfaire sa demande de couple à la roue, il faudrait en effet que l'écart de régime arrive très rapidement dans une plage de 30 tours par minute. Les principales difficultés surgissent lors de freinages appuyés en forte déclivité, où la méthode n'est pas en mesure d'éviter des à-coups de couple lors de l'accouplement, qui provoquent entre autres, une mauvaise usure des pièces mécaniques concernées.

Un autre procédé de pilotage de synchronisation d'un pignon tournant sur un arbre primaire entraîné par une machine de traction du véhicule et lié en rotation à un arbre secondaire de boîte de vitesses à arbres parallèles dépourvue de mécanismes de synchronisation est connu de FR 2 998 529.

La présente invention vise à assurer la synchronisation de deux arbres de boîte de vitesses en un temps minimum, tout en éliminant les principales sources d'à-coups de couple susceptibles d'être engendrées lors de la phase d'accouplement.

Dans ce but, elle propose que le couple calculé soit corrigé par l'accélération de l'arbre secondaire pour construire un signal de couple intermédiaire, tenant compte de l'énergie apportée au système pour minimiser l'écart de régimes.

Cette disposition permet de contrôler l'énergie introduite dans la transmission, pour qu'elle ne soit pas excessive par rapport à l'énergie nécessaire pour effectuer la synchronisation.

La méthode proposée permet d'effectuer les changements de rapport en douceur en toute circonstance, notamment lors de freinages appuyés sur des rampes de descente à forte déclivité. Elle élimine les principales sources d'à-coups de couple susceptibles d'être engendrés lors de la phase de l'accouplement. On évite ainsi l'usure excessive des pièces mécaniques du système d'accouplement.

D'autres caractéristiques et avantages de l'invention, ressortiront clairement de la description suivante d'un mode de réalisation non limitatif de celle-ci, en se reportant aux dessins annexés, sur lesquels :

- les figure 1A à 1C sont une représentation schématique de l'accouplement, et
- la figure 2 résume sous forme logique, le procédé de l'invention.

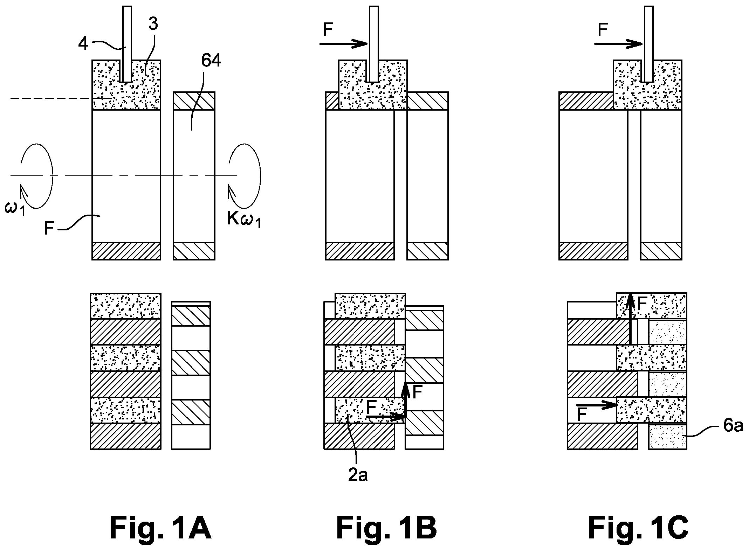

Sur les figures 1A à 1C, on a représenté de façon schématique un baladeur de passage de vitesses 2 et son manchon 3, sa fourchette de commande 4 et un pignon de vitesse 6. Dans la partie inférieure des schémas, on a également fait apparaître les dents 2a et 6a du baladeur et du pignon. Le baladeur 2 et le pignon 3 sont coaxiaux sur un arbre primaire de boîte (non représenté) lié à une source d'énergie (machine de traction) du véhicule. Le pignon 6 est lié en rotation à un arbre secondaire de boîte relié aux roues du véhicule.

La figure 1A représente l'état initial du système, au point mort. Le baladeur 2 tourne à la vitesse $\omega_1$, qui est celle de l'arbre primaire. Le pignon 6 tourne à une vitesse $\omega_2$, différente de $\omega_1$, qui est imposée par un arbre secondaire de la boîte. Sur la figure 1B, le baladeur 2 s'est déplacé jusqu'à ce que ses dents 2a rencontrent celles du pignon 6. Lorsque leurs vitesses de rotation sont égalisées, c'est-à-dire à l'issue de la phase de synchronisation, les dents du baladeur pénètrent entre celles du pignon pour engager la vitesse : c'est la phase d'accouplement du pignon et du baladeur.

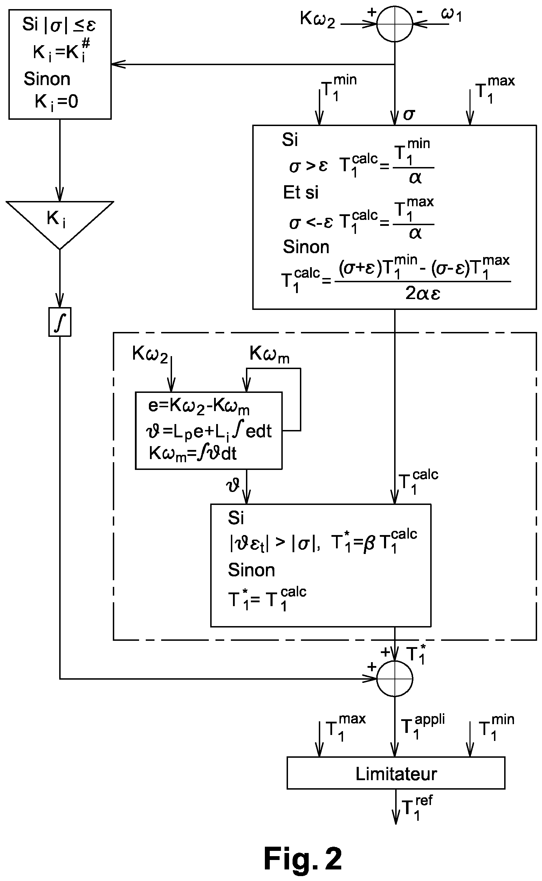

Dans la description suivante du procédé illustré par la figure 2, on adopte les notations suivantes:

$\omega_1$: Régime de l'arbre primaire et du baladeur 2 liés à la source d'énergie;

$T_1$: Couple de la source d'énergie ;

$T_{d1}$: Couple résistant de la source d'énergie (entrée exogène inconnue) ;

$J_1$: Inertie ramenée à l'arbre du baladeur 2;

$\omega_2$: Régime du pignon 6 qui sert de cible à atteindre ;

$T_{d2}$: Couple résistant de du pignon 6 (entrée exogène inconnue) ;

$J_2$ : Inertie ramenée au pignon 6 ;

$K$: Rapport de réduction entre les arbres secondaire et primaire ;

En supposant qu'à l'état initial, les deux arbres de la boîte sont complètement désaccouplés, et en appliquant le principe fondamental de la mécanique, on obtient le modèle dynamique suivant :

- pour l'arbre secondaire (pignon 6) : $J_2\dot{\omega}_2 = T_{d2}$, couple résistant du secondaire, et
- pour l'arbre primaire (baladeur 2) : $J_1\dot{\omega}_1 = T_1 + T_{d1}$, somme du couple moteur et du couple résistant du primaire.

Conformément à la figure 2, la synchronisation des arbres primaire et secondaire (au rapport de démultiplication K près) est pilotée en produisant un signal de commande de référence $T_1^{ref}$ pour synchroniser le pignon 6 tournant sur un arbre primaire entraîné par une machine de traction du véhicule. Cet arbre primaire est lié en rotation à un arbre secondaire de boîte de vitesses à arbres parallèles dépourvue de mécanismes de synchronisation. Le couple de référence $T_1^{ref}$ dépend d'un signal de couple $T_1^{calc}$, calculé pour minimiser l'écart $\sigma$ entre le régime primaire $\omega_1$ et le régime secondaire $\omega_2$, multiplié par le rapport de réduction $K$ entre ces deux arbres. On envoie donc à la machine de traction, avant l'accouplement du pignon sur l'arbre primaire, une commande de couple $T_1^{ref}$ construite de la façon suivante.

On multiplie le signal de référence mesuré $\omega_2^{mes}$ (régime secondaire) par le rapport de réduction mes $K$, pour comparer le produit $K.\,\omega_2^{mes}$ au signal de référence $\omega_1^{mes}$ (régime primaire). Le signe et l'amplitude de l'écart $\sigma = K.\,\omega_2^{mes} - \omega_1^{mes}$ permettent de calculer une valeur de couple calculé $T_1^{calc}$, applicable à l'entrée de la source d'énergie, telle qu'une machine de traction thermique ou électrique. Le couple $T_1^{calc}$ est calculé pour minimiser l'écart $\sigma$ entre le régime primaire $\omega_1$ et le régime secondaire $\omega_2$ multiplié par le rapport de réduction K entre ces deux arbres.

L'écart de régimes $\sigma$ est comparé à un paramètre calibré $\varepsilon$, représentant la précision que l'on souhaite atteindre sur la cible de régime primaire. La précision $\varepsilon$ est l'écart de régime toléré entre la cible et la valeur de régime primaire obtenue à l'issue de la phase de synchronisation. Lorsque $\sigma > \varepsilon$ ou $\sigma < -\varepsilon$ (écart $\sigma$ supérieur en valeur absolue à la précision $\varepsilon$ souhaitée, sur le régime primaire $\omega_1$ ciblé en fin de phase de synchronisation), le couple calculé $T_1^{calc}$ est limité en amplitude par un coefficient calibré $\alpha$, supérieur ou égal à 1, sur des valeurs égales au rapport des couples maximum $T_1^{max}$ et minimum $T_1^{min}$ de la machine de traction sur un coefficient de limitation calibré $\alpha > 1$. Les valeurs $T_1^{min}/\alpha$ ou $T_1^{max}/\alpha$ déterminent le couple de traction utilisable pour la synchronisation. Dans le cas contraire, où l'écart $\sigma$ est inférieur en valeur absolue à la précision $\varepsilon$, le couple calculé $T_1^{calc}$ est avantageusement lissé, en lui appliquant une formule du type :

$$T_1^{calc} = \frac{(\sigma + \varepsilon)T_1^{min} - (\sigma - \varepsilon)T_1^{max}}{2\alpha\varepsilon}$$

Après cette étape, le couple calculé $T_1^{calc}$ peut être corrigé par l'accélération de l'arbre secondaire, $\vartheta = K\dot{\omega}_2$ (qui est la dérivée de la vitesse mesurée $\omega_2$), pour construire un signal de couple intermédiaire $T^*_1$ qui tienne compte de l'énergie apportée par la machine de traction pour minimiser l'écart des régimes $\sigma$.

Comme indiqué sur la figure 2, l'accélération $\vartheta$ est calculée à partir de l'écart $e = K\omega_2 - K\omega_m$ entre une mesure du régime $(K\omega_2)$, et de son modèle intégré $K\omega_m$. Pour ce calcul, on fait la somme de l'écart de vitesses $e$ pondéré par un gain calibrable $L_p$, et de l'intégrale de l'écart $e$, pondéré par un deuxième gain calibrable $L_i$.

Connaissant l'accélération $\vartheta$, on peut comparer en valeur absolue l'écart des régimes $\sigma$ avec le produit de $\vartheta$ par un paramètre à calibrer $\varepsilon_t$, pour moduler éventuellement l'objectif de couple calculé $T_1^{calc}$. On passe ainsi de la valeur calculée $T_1^{calc}$ au signal intermédiaire $T_1^*$, en comparant l'écart des régimes $\sigma$ et le produit de l'accélération $\vartheta$ par le paramètre calibré $\varepsilon_t$, et en modulant le signal de couple calculé $T_1^{calc}$ par l'accélération $\vartheta$, si le produit $\vartheta \times \varepsilon_t$ est supérieur en valeur absolue à l'écart de régimes $(\sigma)$. Cette modulation tient compte de l'énergie donnée au système pour atteindre la consigne : si $|\vartheta\varepsilon_t| > |\sigma|$, $T_1^* = \beta T_1^{calc}$, sinon $T_1^* = T_1^{calc}$, (avec $0 \leq \beta \leq 1$).

Selon une autre disposition de l'invention, on active une opération d'intégration de l'écart des régimes σ, multiplié par un gain calibré $K_i$, lorsque cet écart est inférieur en valeur absolue à la précision souhaitée $\varepsilon$. Le gain $K_i$ a une valeur $K_i^{\#}$ non nulle. Dans le cas contraire $K_i$ est nul, et le terme de correction intégré l'est également. Comme indiqué sur la figure 2, le signal de couple intermédiaire $T_i^*$ est corrigé par ce terme d'intégration, pour donner un signal de couple appliqué $T_1^{appli}$.

Le signal de commande de couple $T_1^{ref}$ de la machine de traction, est alors obtenu en limitant le couple appliqué $T_1^{appli}$ dans un dernier « limiteur », entre les valeurs de couple maximum $T_1^{max}$ et de couple minimum $T_1^{min}$ de la machine de traction. Cette limitation est opérée sur le couple appliqué, après la correction éventuelle du signal intermédiaire $T_1^*$, par le terme intégré. Le couple appliqué $T_1^{appli}$ est ainsi surveillé pour déterminer s'il est compris entre les couples minimum et maximum $T_1^{min}$ et $T_1^{max}$ de la machine de traction. Si ce n'est pas le cas, il est saturé sur l'une de ces valeurs.

Sur cette base de calcul, le procédé de pilotage proposé peut ainsi se décomposer en deux phases principales A et B, et différentes étapes.

La première phase (A) consiste à synchroniser la vitesse de l'arbre (pignon) $\omega_1$ à celle de l'arbre (pignon) $\omega_2$ au rapport de démultiplication près, en produisant le signal de référence $T_1^{ref}$. Pour produire ce signal de référence, les différentes étapes sont :

a) construction dans le bloc A de la figure 2, du signal de couple calculé $T_1^{calc}$ en multipliant le signal de référence mesuré $\omega_2^{mes}$ (vitesse de l'arbre (pignon) 2) par le rapport de réduction K, afin de pouvoir le comparer au signale de référence $\omega_1^{mes}$ (vitesse de l'arbre (pignon) 1) ; en fonction du signe et de l'amplitude de l'erreur s = $Kw_2 - w_1$, calcul du couple à appliquer à l'entrée de la source d'énergie (par exemple une machine électrique) ;

b) construction dans le bloc B, du signal d'accélération $\vartheta = \dot{\omega}_2$; l'intérêt de cette mesure réside dans sa robustesse, car on produit la dérivée d'un signal, sans connaître sa dynamique, et avec un filtre qui compense les bruits de mesure ;

c) construction dans le bloc C, du signal de couple intermédiaire $T_1^*$, en déterminant si le système possède l'énergie nécessaire pour réduire l'écart de régimes σ : si c'est le cas on réduit (ou on annule) l'énergie pour éviter l'éventuel dépassement ;

d) production d'un signal de couple appliqué $T_1^{appli}$, par addition au signal de couple intermédiaire $T_1^*$ issu du bloc D, d'un terme intégré, si l'erreur de vitesse se trouve comprise entre - $\varepsilon$ et $\varepsilon$ ;

e) surveillance du signal de couple appliqué $T_1^{appli}$, pour vérifier si ce dernier est compris, ou non, entre les valeurs $T_1^{min}$ et $T_1^{max}$ ; si ce n'est pas le cas on sature le signale $T_1^{appli}$, et on bloque par la même occasion l'intégrateur pour produire le signal de référence $T_1^{ref}$ qu'on va appliquer aux bornes du moteur.

Lorsque les éléments tournants sont synchronisés, la deuxième phase du procédé de passage de vitesses proposé (ou phase d'accouplement), consistant à déplacer le baladeur de sa position « ouverte » à sa position « fermée », peut intervenir.

En conclusion, l'invention permet de réduire l'écart de régime très rapidement pour arriver à une valeur d'environ 30 tours par minute. Le procédé rend la phase suivante d'accouplement des deux arbres satisfaisante pour l'utilisateur, c'est-à-dire avec le moins d'à-coup de couple possible, en dépit de la reprise de couple. Il permet notamment de gérer des suivis de trajectoire de type rampe, correspondants aux cas défavorables de freinage appuyé mentionnés plus haut. Enfin, la convergence vers le régime cible ne dépend aucunement des paramètres intrinsèques du système (comme l'inertie et le temps de réponse des actionneurs et/ou de la machine de traction, ou d'éventuels retard), ce qui rend cette méthode robuste. Elle est valable quel que soit le type de source d'énergie sollicité pour la synchronisation, que ce soit une machine électrique ou un moteur thermique, que celui-ci tourne ou non sur un régime de ralenti, en transmettant du couple aux roues, ou pas.

**Revendications**

1. Procédé de pilotage de la synchronisation d'un pignon (6) tournant sur un arbre primaire entraîné par une machine de traction du véhicule et lié en rotation à un arbre secondaire de boîte de vitesses à arbres parallèles dépourvue de mécanismes de synchronisation, par envoi à la machine de traction, avant l'accouplement du pignon sur l'arbre primaire, d'une commande de couple $(T_1^{ref})$ qui dépend d'un signal de couple $(T_1^{calc})$ calculé pour minimiser l'écart ($\sigma$) entre le régime primaire ($\omega_1$) et le régime secondaire ($\omega_2$) multiplié par le rapport de réduction (K) entre ces deux arbres, **caractérisé en ce que** le couple calculé $(T_1^{calc})$ est corrigé par l'accélération de l'arbre secondaire ($\vartheta$), pour construire un signal intermédiaire $(T^*_1)$, tenant compte de l'énergie apportée au système pour minimiser l'écart de régimes ($\sigma$).

**2.** Procédé de pilotage selon la revendication 1, **caractérisé en ce que** l'accélération $(\vartheta)$ est calculée à partir de l'écart $(e = K\omega_2 - K\omega_m)$ entre une mesure du régime $(K\omega_2)$, et de son modèle intégré $(K\omega_m)$.

**3.** Procédé de pilotage selon la revendication 1 ou 2, **caractérisé en ce qu'**on compare l'écart des régimes $(\sigma)$ et le produit de l'accélération $(\vartheta)$ par un paramètre calibré $(\varepsilon_t)$, et **en ce qu'**on module le signal de couple calculé ( $T_1^{calc}$ ) si le produit $(\vartheta)x(\varepsilon_t)$ est supérieur en valeur absolue à l'écart de régimes $(\sigma)$.

**4.** Procédé de pilotage selon la revendication 1, 2 ou 3, **caractérisé en ce que** l'amplitude du signal de couple calculé $(T_1^{calc})$ est limitée sur des valeurs égales au rapport des couples maximum $(T_1^{max})$ et minimum $(T_1^{min})$ de la machine de traction sur un coefficient de limitation calibré $(\alpha)$, lorsque l'écart $(\sigma)$ est supérieur en valeur absolue à la précision $(\varepsilon)$ souhaitée sur le régime primaire $(\omega_1)$ ciblé en fin de phase de synchronisation.

**5.** Procédé de pilotage selon l'une des revendications précédentes, **caractérisé en ce que** le couple calculé $(T_1^{calc})$ est lissé, lorsque l'écart $(\sigma)$ est inférieur en valeur absolue à la précision $(\varepsilon)$ souhaitée sur le régime primaire $(\omega_1)$ ciblé en fin de phase de synchronisation.

**6.** Procédé de pilotage selon l'une des revendications précédentes, **caractérisé en ce que**, lorsque l'écart de régimes $(\sigma)$ est inférieur en valeur absolue à la précision souhaitée $(\varepsilon)$, la valeur du couple $(T_1^{appli})$ appliqué par la machine de traction est établie en corrigeant le couple intermédiaire $(T^*_1)$ par une intégration de l'écart $(\sigma)$, avec un gain calibré $(K_i)$ non nul.

**7.** Procédé de pilotage selon l'une des revendications précédentes, **caractérisé en ce que** la commande de couple $(T_1^{ref})$ de la machine de traction est obtenue en limitant le signal de couple appliqué $(T_1^{appli})$ entre les valeurs de couple maximum $(T_1^{max})$ et de couple minimum $(T_1^{min})$ de la machine de traction.

**8.** Procédé de passage de vitesses selon l'une des revendications précédentes, **caractérisé en ce qu'**il comporte une première phase de synchronisation conforme à l'une des revendications précédentes, précédant une deuxième phase d'accouplement du pignon avec son arbre.

**Patentansprüche**

**1.** Verfahren zur Steuerung der Synchronisation eines Ritzels (6), das auf einer Primärwelle dreht, die von einer Antriebsmaschine des Fahrzeugs angetrieben wird und in Drehung mit einer Sekundärwelle eines Parallelwellengetriebes verbunden ist, das keine Synchronisationsmechanismen aufweist, durch Senden an die Antriebsmaschine, vor dem Koppeln des Ritzels mit der Primärwelle, eines Drehmomentbefehls $(T_1^{ref})$, der von einem Drehmomentsignal $(T_1^{calc})$ abhängt, das berechnet wird, um die Abweichung $(\sigma)$ zwischen der Primärdrehzahl $(\omega_1)$ und der Sekundärdrehzahl $(\omega_2)$ multipliziert mit dem Untersetzungsverhältnis $(K)$ zwischen diesen zwei Wellen zu minimieren, **dadurch gekennzeichnet, dass** das berechnete Drehmoment $(T_1^{calc})$ durch die Beschleunigung der Sekundärwelle $(\vartheta)$ korrigiert wird, um ein Zwischensignal $(T^*_1)$ zu konstruieren, unter Berücksichtigung der dem System zugeführten Energie, um die Abweichung von Drehzahlen $(\sigma)$ zu minimieren.

**2.** Steuerverfahren nach Anspruch 1, **dadurch gekennzeichnet, dass** die Beschleunigung $(\vartheta)$ ausgehend von der Abweichung $(e = K\omega_2 - K\omega_m)$ zwischen einer Messung der Drehzahl $(K\omega_2)$ und ihres integrierten Modells $(K\omega_m)$ berechnet wird.

**3.** Steuerverfahren nach Anspruch 1 oder 2, **dadurch gekennzeichnet, dass** die Abweichung der Drehzahlen $(\sigma)$ und das Produkt aus der Beschleunigung $(\vartheta)$ und einem kalibrierten Parameter $(\varepsilon_t)$ verglichen werden, und dass das berechnete Drehmomentsignal $(T_1^{calc})$ moduliert wird, wenn das Produkt $(\vartheta)x(\varepsilon_t)$ im Absolutwert größer ist als die Abweichung von Drehzahlen $(\sigma)$.

**4.** Steuerverfahren nach Anspruch 1, 2 oder 3, **dadurch gekennzeichnet, dass** die Amplitude des berechneten Drehmomentsignals $(T_1^{calc})$ auf Werte gleich dem Verhältnis der maximalen $(T_1^{max})$ und minimalen Drehmomente $(T_1^{min})$ der Antriebsmaschine bei einem kalibrierten Begrenzungskoeffizienten $(\alpha)$ begrenzt ist, wenn die Abweichung $(\sigma)$ im Absolutwert größer ist als die gewünschte Präzision $(\varepsilon)$ bei der angestrebten Primärdrehzahl $(\omega_1)$ am Ende der Synchronisationsphase.

**5.** Steuerverfahren nach einem der vorhergehenden Ansprüche, **dadurch gekennzeichnet, dass** das berechnete Drehmoment $(T_1^{calc})$ geglättet wird, wenn die Abweichung $(\sigma)$ im Absolutwert kleiner ist als die gewünschte Präzision $(\varepsilon)$ bei der angestrebten Primärdrehzahl $(\omega_1)$ am Ende der Synchronisationsphase.

**6.** Steuerverfahren nach einem der vorhergehenden Ansprüche, **dadurch gekennzeichnet, dass**, wenn die Abweichung von Drehzahlen $(\sigma)$ im Absolutwert kleiner ist als die gewünschte Präzision $(\varepsilon)$, der Wert

des von der Antriebsmaschine angewendeten Drehmoments $(T_1^{appli})$ erstellt wird, indem das Zwischendrehmoment $(T^*_1)$ durch eine Integration der Abweichung $(\sigma)$ mit einer kalibrierten Verstärkung $(K_i)$ ungleich Null korrigiert wird.

7. Steuerverfahren nach einem der vorhergehenden Ansprüche, **dadurch gekennzeichnet, dass** der Drehmomentbefehl $(T_1^{ref})$ der Antriebsmaschine durch Begrenzen des angewendeten Drehmomentsignals $(T_1^{appli})$ zwischen dem maximalen Drehmomentwert $(T_1^{max})$ und minimalen Drehmomentwert $(T_1^{min})$ der Antriebsmaschine erhalten wird.

8. Gangschaltungsverfahren nach einem der vorhergehenden Ansprüche, **dadurch gekennzeichnet, dass** es eine erste Synchronisationsphase nach einem der vorhergehenden Ansprüche aufweist, die vor einer zweiten Phase der Kopplung des Ritzels mit seiner Welle liegt.

## Claims

1. Method for controlling the synchronization of a rotating pinion (6) on a primary shaft driven by a traction machine of the vehicle and rotationally connected to a secondary shaft of a gearbox with parallel shafts and without a synchronization mechanism, by sending to the traction machine, before the coupling of the pinion to the primary shaft, a torque command $(T_1^{ref})$ which depends on a torque signal $(T_1^{calc})$ calculated to minimize the difference $(\sigma)$ between the primary speed $(\omega_1)$ and the secondary speed $(\omega_2)$, multiplied by the reduction ratio $(K)$ between these two shafts, **characterized in that** the calculated torque $(T_1^{calc})$ is corrected by the acceleration of the secondary shaft $(\vartheta)$, to construct an intermediate signal $(T^*_1)$, allowing for the energy supplied to the system in order to minimize the speed difference $(\sigma)$.

2. Control method according to Claim 1, **characterized in that** the acceleration $(\vartheta)$ is calculated on the basis of the difference $(e = K\omega_2 - K\omega_m)$ between a measurement of the speed $(K\omega_2)$ and a measurement of its integrated model $(K\omega_m)$.

3. Control method according to Claim 1 or 2, **characterized in that** the speed difference $(\sigma)$ is compared with the product of the acceleration $(\vartheta)$ by a calibrated parameter $(\varepsilon_t)$, and **in that** the calculated torque signal $(T_1^{calc})$ is modulated if the product $(\vartheta) \times (\varepsilon_t)$ is greater in absolute value than the speed difference $(\sigma)$.

4. Control method according to Claim 1, 2 or 3, **characterized in that** the amplitude of the calculated torque signal $(T_1^{calc})$ is limited on values equal to the ratio of the maximum) and minimum $(T_1^{min})$ torques of the traction machine to a calibrated coefficient of limitation $(\alpha)$ if the difference $(\sigma)$ is greater in absolute value than the desired accuracy $(\varepsilon)$ on the primary speed $(\omega_1)$ targeted at the end of the synchronization phase.

5. Control method according to any of the preceding claims, **characterized in that** the calculated torque $(T_1^{calc})$ is smoothed if the difference $(\sigma)$ is lower in absolute value than the desired accuracy $(\varepsilon)$ on the primary speed $(\omega_1)$ targeted at the end of the synchronization phase.

6. Control method according to any of the preceding claims, **characterized in that**, if the speed difference $(\sigma)$ is lower in absolute value than the desired accuracy $(\varepsilon)$, the value of the torque $(T_1^{appli})$ applied by the traction machine is established by correcting the intermediate torque $(T^*_1)$ by integrating the difference $(\sigma)$, with a non-zero calibrated gain $(K_i)$.

7. Control method according to any of the preceding claims, **characterized in that** the torque command $(T_1^{ref})$ of the traction machine is obtained by limiting the applied torque signal $(T_1^{appli})$ between the values of maximum torque $(T_1^{max})$ and minimum torque $(T_1^{min})$ of the traction machine.

8. Method of gear shifting according to any of the preceding claims, **characterized in that** it comprises a first phase of synchronization according to any of the preceding claims, preceding a second phase of coupling the pinion to its shaft.

**Fig. 1A**　　　**Fig. 1B**　　　**Fig. 1C**

**Fig. 2**

**EP 3 280 932 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- DE 102006019239
- FR 2998529